# EUROPÄISCHE PATENTSCHRIFT

(11) **EP 1 545 950 B1**
(45) Veröffentlichungstag und Bekanntmachung des Hinweises auf die Patenterteilung: **16.10.2013**
(21) Anmeldenummer: 03798934.0
(22) Anmeldetag: 12.08.2003
(51) Int. Cl.: B60T 8/00

(54) **VERFAHREN ZUR VERBESSERUNG DER FAHREIGENSCHAFT EINES FAHRZEUGS BEI TEILGEBREMSTER FAHRT**
METHOD FOR IMPROVING THE HANDLING CHARACTERISTIC OF A VEHICLE DURING PARTIALLY BRAKED DRIVING
PROCEDE POUR AMELIORER LA TENUE DE ROUTE D'UN VEHICULE EN CAS DE CONDUITE AVEC FREINAGE PARTIEL

(30) Priorität: 25.09.2002 DE 10244557
(43) Veröffentlichungstag der Anmeldung: 29.06.2005
(73) Patentinhaber: Continental Teves AG & Co. oHG, 60488 Frankfurt am Main (DE)
(72) Erfinder: HERRMANN, Thorsten, 60487 Frankfurt/Main (DE); POURSEDIGHI, Mahan, 65929 Frankfurt/Main (DE); SCHAFFERUS, Holger, 39118 Magdeburg (DE); WOYWOD, Jürgen, 64546 Mörfelden (DE); BURKHARD, Dieter, 55411 Bingen-Büdelheim (DE)
(86) Internationale Anmeldenummer: PCT/EP2003/050375
(87) Internationale Veröffentlichungsnummer: WO 2004/031010

(56) Entgegenhaltungen:
- EP-A- 0 482 374
- EP-A- 1 167 146
- WO-A-02/062639
- DE-A- 10 101 197
- DE-A- 19 539 345
- DE-A- 19 628 980
- DE-A- 19 816 432

## Beschreibung

Die Erfindung betrifft ein Verfahren zur Verbesserung der Fahreigenschaft eines Fahrzeugs bei teilgebremster Fahrt.

Bereits seit einigen Jahren sind Fälle bekannt, bei denen Fahrzeuge einer Modellreihe im Teilbremsbereich zu einem kritischen Fahrverhalten neigen. Dieser Effekt, der u.a. auf elastokinematischen Eigenheiten des Fahrwerks beruht, kann bei ungünstigen Konstellationen zu Beeinträchtigungen des Fahrkomforts bis hin zu kritischen Situationen führen. Darüber hinaus kann es generell bei jedem Fahrzeug auf Grund unterschiedlicher Aufstandskräfte und Reibwerte oder Reibpaarungen in der Bremse(unterschiedliche Beläge) zum asymmetrischen Aufbau von Längskraftanteilen im Teilbremsbereich kommen. Das dabei entstehende Giermoment führt ähnlich wie im vorstehenden Fall zu einem unkomfortablen bis kritischen Fahrverhalten des Fahrzeuges.

Fahrzeuge mit einer derartigen Fahrwerks- oder Bremsenkonfiguration, beeinflussen das Fahrverhalten beim Bremsen dahingehend, dass das Fahrzeug während des Bremsvorganges die gewünschte Fahrspur nicht einhält. Das Fahrzeug folgt einem Kurs, der von der Fahrwerks- und/oder Bremsenkonfiguration vorgegeben wird. Man spricht dabei von einem "Schiefziehen" des Fahrzeugs. Dieses Schiefziehen stellt zwar einen stabilen Fahrzustand dar, der aber trotzdem von der Fahrervorgabe abweicht. Mit den bisherigen Verfahren zur Bremsenoptimierung kann ein solches Verhalten jedoch nicht kompensiert werden. ABS (Antiblockiersystem) zum Beispiel, eine radindividuelle Regelung, beeinflusst den Bremsdruck an einer Radbremse nach Maßgabe des Laufverhaltens dieses Rades. Die im ABS enthaltene elektronische Bremskraftverteilung (EBV) regelt automatisch den Bremsdruck der Hinterachse und hält das Fahrzeug stabil bei bestmöglicher Abbremsung der Hinterachse. EBV passt die Bremskraft der Hinterräder an diejenigen der Vorderräder an und vermeidet dadurch sowohl Unter- als auch Überbremsen der Hinterräder. EBV nutzt die Bauteile des ABS zur radindividuellen Druckmodulation der Hinterradbremsen.

Hiermit können aber Momente um die Hochachse des Fahrzeugs nicht erzeugt werden, da die Räder jeweils nur individuell nach dem Bremsschlupf, aber nicht in Abhängigkeit von dem Fahrzeugkurs angesteuert werden.

Eine Korrektur des Zustands durch ein ESP (Elektronisches Stabilitäts Programm) erfolgt aber auch nicht, da die einen ESP-Eingriff auslösenden Bedingungen und die Regelschwellen zu spät, oder nicht erreicht werden. Diese ESP-Bedingungen und Regelschwellen könnten auch nicht entsprechend verändert oder abgesenkt werden, da der nötige Störabstand für Fehlanregelungen beibehalten werden muss.

Auch kommt es bei einem ESP-Eingriff, der in einer instabilen Fahrsituation zur Kompensation einer Drehung des Fahrzeugs um die Hochachse ein zusätzliches, der Drehung des Fahrzeugs entgegen wirkendes Giermoment erzeugt, indem individuell in einer Radbremse Bremsdruck aufgebaut bzw. abgebaut wird, zu Verzögerungsänderungen, die vom Fahrer registriert werden. Weitere Nachteile sind die Befüllung des Niederdruckspeichers beim Druckabbau, sowie das Öffnen des Umschaltventils beim aktiven Druckaufbau und die damit verbundene Befüllung des Niederdruckdämpfers, was im Bremspedal spürbar ist. Darüber hinaus können in dem Bremsdruckbereich, in dem die Regelung bzw. Steuerung der Bremsanlage stattfindet, Schaltblenden der Einlassventile geschaltet sein, was zu Druckaufbaugradienten führt, die sich von den Druckaufbaugradienten von nicht geschalteten Schaltblenden unterscheiden.

Weiterhin treten bei teilgebremster (noch keine ABS Aktivität) Kurvenfahrt mit einem Kraftfahrzeug insbesondere nach dem ersten Antritt übersteuernde Fahrzeuginstabilitäten auf, die vom Fahrer zur Stabilisierung Lenkaktionen verlangen, die ihn überfordern können. Die primären Ursachen für dieses Verhalten liegen in der Radlastverlagerung in Richtung der vorderen Achse, die die Fähigkeit zur Seitenkraftübertragung tendenziell nach vorne verschiebt. In der Folge entsteht die beschriebene übersteuernde Tendenz. Dieser Effekt kann prinzipiell durch folgende Randbedingungen unterstützt werden:
a) gebremster Zustand (Ausnutzung eines Anteils der übertragbaren Kraft bereits für die Bremskraft)
b) ungünstige, bereits statisch vorhandene Achslastverteilung zur Vorderachse hin (eher bei frontgetriebenen Fahrzeugen)
c) hinterachsgetriebene Fahrzeuge, da meist das Schleppmoment des Motors im überlagerten Schubzustand die Hinterachse leicht in einen schlupfenden Zustand versetzt, der wiederum einen Teil des übertragbaren Seitenkraftpotentials beansprucht

Die genannten übersteuernden Instabilitäten treten insbesondere im teilgebremsten Zustand auf, da infolge der Bremskraftverteilung in diesem Bereich kein Giermoment in die Fahrzeugstruktur eingeleitet wird, das der Übersteuertendenz entgegenwirkt. Erhöht der Fahrer dagegen den Bremsdruck weiter, so erreicht er im System Reifen/Fahrbahn die Kraftschlussgrenze und infolgedessen wird ABS aktiv. Da die übertragbare Kraft auf der kurveninneren Seite durch die eingeprägte Querdynamik geringer ist, wird ein Giermoment erzeugt, das der übersteuernden Tendenz entgegenwirkt. Daher verschwinden die Stabilitätsprobleme des Fahrzeugs meist, sobald der Fahrer den teilgebremsten Bereich überbremst.

Für Systeme, die im genannten teilgebremsten Bereich eine Fahrzeugstabilisierung erreichen wollen, bietet sich damit eine ähnliche Druckmodulation an wie sie sich bei aktivem ABS ergibt, d.h. auch bereits im teilgebremsten Bereich ein aktiver Druckabbau an den kurveninneren Rädern. Prinzipiell wird dies auch schon mit der bekannten ESP Funktion durchgeführt. Allerdings sind die folgenden Nachteile bei der ESP Regelung vorhanden:
a) Der ESP Regler ist zu unsensibel (Eintrittsschwellen zu gross) für die oft im unteren Dynamikbereich angesiedelten übersteuernden Störungen (ungenügende Wirkung ist die Folge).
b) Es ergibt sich ein unkomfortabler Gesamteindruck (oft notwendiger aktiver Druckaufbau mit zugehöriger Ventil - und Pumpenaktivität beeinträchtigt den Pedal - und Geräuschkomfort) .
c) Der Fahrer bekommt über die ESP Funktionslampe eine weitere Rückmeldung auch bei Eingriffen, die nur eine Fahrerassistenz darstellen.

Es wäre daher wünschenswert, unabhängig von der eine Abweichung von dem gewünschten Fahrkurs bewirkenden Ursache ein Verfahren bzw. eine Regelung zur Verfügung zu stellen, das durch gezielte Eingriffe des Bremssystems das Gieren des Fahrzeuges bei jedem Kurs und jeder Geschwindigkeit auf ein für den Fahrer komfortables bis leicht beherrschbares Maß reduziert.

In der EP 0 482 374 A1 ist eine elektro-pneumatische Bremsanlage für Nutzkraftfahrzeuge und Busse beschrieben, das einen elektrischen Bremswertgeber sowie ein elektrisches Steuergerät aufweist, das außer zur Brems-Signalverarbeitung auch noch für die Signalverarbeitung von Sensorsignalen eines Lenksystems ausgerüstet ist. Die Lenksensorsignale sollen beim bremsbewirkten Ansteuern der den Bremszylindern vorgeordneten Drucksteuerventilen zwecks Ausregeln der Lenkmomente mit berücksichtigt werden. Dabei ermittelt die Bremsanlage die Korrekturdrücke ausschließlich bei einer Geradeausfahrt.

Aus der DE 195 39 345 A1 ist ein ABS- und/oder ASC-Regelsystem für Kraftfahrzeuge mit einer Auswerteeinheit zur Ermittlung einer der Querbeschleunigung proportionalen Größe und mit Aktuatoren zur Verminderung des Bremsdruckes an mindestens einem Rad bei Kurvenfahrt und gleichzeitiger Bremsbetätigung bekannt, bei dem eine symmetrische Verminderung des Bremsdruckes an beiden Rädern einer Achse vorgenommen wird, wenn der Betrag der der Querbeschleunigung proportionalen Größe größer als ein erster unterer Schwellwert ist.

Die DE 196 28 980 A1 offenbart ein Verfahren zur Verbesserung des Regelverhaltens eines ABS, insbesondere zur Verbesserung der Lenkbarkeit des Fahrzeugs und der Fahrstabilität während einer Kurvenfahrt, bei dem aus dem Drehverhalten der Fahrzeugräder eine Fahrzeug-Referenzgeschwindigkeit abgeleitet und Kriterien zur Erkennung einer Kurvenfahrtsituation und der Kurvenrichtung gewonnen werden, bei dem bei Kurvenerkennung anstelle des Standard-Regelmodus ein Sonder- bzw. kurven-Regelmodus in Funktion tritt, der eine Verringerung des Bremsdruckes an dem kurveninneren Vorderrad und/oder Hinterrad hervorruft. Hierbei wird im Teilbremsbereich beim Überschreiten eines Schwellwertes der Radgeschwindigkeits-Differenz die die Differenz zwischen den aus den Geschwindigkeiten der beiden Räder einer Fahrzeugseite gebildeten Seiten-Radgeschwindigkeitssummen darstellt, der Bremsdruck an dem kurveninneren Vorderrad und/oder an dem kurveninneren Hinterrad abgebaut, bis der Schwellwert und ein Hystereseband unterschritten sind.

In der DE 198 16 432 A1 ist ein Verfahren zur Bremsdruckregelung an den Rädern zumindest einer Achse eines Kraftfahrzeuges beschrieben, bei dem fahrzustandsabhängige Daten von mindestens einer Sensorvorrichtung ermittelt und einer Auswerteeinheit zugeleitet werden, welche aus diesen fahrzustandsabhängigen Daten Stellsignale für Aktuatoren zur Einstellung des Radbremsdruckes an den einzelnen Rädern bildet, wobei in Abhängigkeit von den ermittelten und ausgewerteten fahrzustandsabhängigen Daten eine Verminderung des Bremsdruckes an mindestens einem kurveninneren Rad oder eine Erhöhung des Bremsdruckes an zumindest einem kurvenäußeren Rad bei Kurvenerkennung und bei gleichzeitiger Bremsbetätigung vorgenommen wird. Bei den fahrzustandsabhängigen Daten, welche ausgewertet und zwischengespeichert werden, handelt es sich um die Raddrehzahlen der einzelnen Räder.

Aus der WO 02/062639 A1 ist ein Verfahren zur Bremsdruckregelung an den Rädern mindestens einer Achse eines Kraftfahrzeuges bekannt, wobei der Lenkwinkel bzw. die Lenkwinkelgeschwindigkeit und mindestens eine Größe zum Erkennen des Fahrzeugkurses, wie die Gierwinkelgeschwindigkeit und/oder die Querbeschleunigung und/oder die Raddrehzahlen, von Sensorvorrichtungen ermittelt und einer Auswerteeinheit zugeleitet werden, welche den Lenkwinkel bzw. die Lenkwinkelgeschwindigkeit und die Größe auswertet und Stellsignale für Aktuatoren zur Einstellung des Radbremsdruckes an den einzelnen Rädern bildet. In dem Fall, wenn eine Bremsbetätigung erfolgt, wird während der Bremsbetätigung ein Vergleich zwischen dem ausgewerteten Lenkwinkel bzw. der ausgewerteten Lenkwinkelgeschwindigkeit und der Größe durchgeführt, und wenn sich bei dem Vergleich eine Abweichung ergibt, wird in Abhängigkeit von dem Vergleichsergebnis eine Druckdifferenz des Bremsdruckes zwischen mindestens zwei Rädern bei ermittelten Idealkurs eingestellt, wobei der ermittelte Idealkurs insbesondere eine Geradeausfahrt ist.

Der Erfindung liegt die Aufgabe zugrunde, ein Verfahren zur Verbesserung der Fahreigenschaft eines Fahrzeugs bei teilgebremster Fahrt zu schaffen.

Erfindungsgemäß wird diese Aufgabe durch das Verfahren nach Anspruch 1 gelöst, indem eine Fahrstabilitätsregelung zum Korrigieren bzw. Regeln von Abweichungen von einer gewünschten Fahrspur so ausgebildet ist, dass der Eintritt in eine aktivierte und der Austritt aus einer aktivierten Regelungssituation in Abhängigkeit von Bedingungen, die nach Maßgabe von einer Geradeausfahrt und einer Kurvenfahrt ermittelt werden, durchgeführt wird.

Durch das Verfahren wird eine Regelungssituation abhängig davon erkannt, ob das Fahrzeug geradeaus oder in einer Kurve fährt. Erst bei erkannter Regelungssituation wird die Abweichung von der gewünschten Fahrspur des Fahrzeugs während des Bremsvorganges ermittelt und nach Maßgabe des Ermittlungsergebnisses die Abweichung zwischen der gewünschten Fahrspur und dem Spurverlauf des Fahrzeugs korrigiert, wenn die Abweichung mindestens einen Schwellenwert überschreitet. Das Verfahren soll bevorzugt in einem Fahrzeug mit einer ESP Fahrstabilitätsregelung durchgeführt werden, so dass der Schwellenwert ein modifizierter ESP Schwellenwert sein kann. Das Verfahren ermöglicht ein zuverlässiges Erkennen der zu ändernden Fahrsituation anhand der Abweichung des ESP Fahrzeugmodells, in einem neuen Bereich. Hierbei wird ein eigenständiger ESP Regler mit sensibleren Schwellen mit einer Eingriffsstrategie ohne aktiven Druckaufbau verwendet. Die Pumpenaktivierung wird fast vollständig vermieden und keine ESP Funktionslampe aktiviert. Der Regler besitzt also die Eigenschaft, frühzeitiger und weitestgehend unbemerkt vom Fahrer zu agieren. Während der gesamten Regelaktivitäten erhält der Fahrer somit vorteilhaft keine haptische, optische oder akustische Rückmeldung (Pedal, Lampe, Signalton). Weitere Vorteile des LDE Verfahrens sind:
Robustheit gegen Fehlerkennungen bzw. Störungen.
Optimierte Ventilaktivitäten mit dem Ziel, bedarfgerechter Einsteuerung.
Selektive Pumpenansteuerung nur im Bedarfsfall (Einbindung des Niederdruckspeicher-Modells).
Harmonische Interaktion mit anderen Subsystemen wie ESP,ABS, EBV und ESBS.

Das erfindungsgemäße Verfahren weist die folgenden Schritte auf: Ermitteln von internen und externen Größen und Zuständen die das Fahrverhalten und den Spurverlauf des Fahrzeugs wiedergeben, Ermitteln einer aktivierten Regelungssituation bzw. eines Eintritts in eine Regelung in Abhängigkeit von einer Geradeausfahrt oder einer Kurvenfahrt unter Einbeziehung der internen und externen Größen und Zustände, und Korrigieren bzw. Regeln von Abweichungen von einer gewünschten Fahrspur durch Einstellung bzw. Modifikation des eingesteuerten Bremsdrucks, wenn mindestens ein Schwellenwert der Gierratenregelung überschritten wird.

Vorteilhaft wird mit dem Low Dynamic ESP (LDE) unabhängig von der Ursache eines Schiefziehens des Fahrzeugs ein Verfahren zur Verfügung gestellt, das durch gezielte Eingriffe in die Radbremsen des Bremssystems das Gieren des Fahrzeuges bei jeder Geschwindigkeit auf ein für den Fahrer beherrschbares Maß reduziert.

Erfindungsgemäß ist, dass die internen und externen Größen mit Schwellenwerten verglichen werden und eine Bewertung der Zustände derart erfolgt, ob die Zustände der Fahrstabilitätsregelung aktiviert oder deaktiviert sind.

Zur Ermittlung des Ein- bzw des Austritts in eine Regelsituation, werden vorteilhaft als interne und externe Größen und Zustände, der Lenkwinkel (δ), die Lenkwinkelgeschwindigkeit (̇δ̇), der Bremsdrucks (*pₘₐᵢₙ*), die Fahrzeuggeschwindigkeit (*v*), der Querneigungswinkel (*α*), die Querbeschleunigung (*aᵢₛₜ*), der Kurvenradius und Regelungszustände einer Fahrstabilitätsregelung in Betracht gezogen.

Der Schwellenwert der Gierratenregelung, der nach Maßgabe der Drehung um die Hochachse des Fahrzeugs ermittelt wird und der zum Korrigieren bzw. Regeln von Abweichungen von einer gewünschten Fahrspur durch Einstellung bzw. Modifikation des eingesteuerten. Bremsdrucks überschritten werden muss, wird erfindungsgemäß nach Maßgabe von der Geradeausfahrt oder der Kurvenfahrt ermittelt. Erfindungsgemäß wird der Schwellenwert (*S_{ESP}*) der Gierratenregelung bei einer Geradeausfahrt mittels eines ersten und bei einer Kurvenfahrt mittels eines zweiten Korrekturfaktors (*k*_{*GERADE*1}*, k*_{*KURVE*2}) modifiziert.

Als Bedingung zum Erkennen eines Eintritts in eine Regelungssituation ist vorgesehen, dass bei einer teilgebremsten Geradeausfahrt der Eintritt Gᵢₙ in die Regelung nach der Beziehung Gᵢₙ = *f*(*δ,̇δ̇,pₘₐᵢₙ,v,α*) erfolgt, wenn eine oder mehrere der weiteren folgenden Bedingungen erfüllt sind:
ESP ist nicht aktiv,
ABS ist nicht aktiv,
Geradeausfahrt ist ermittelt.

Ferner ist als weitere vorteilhafte Bedingung zum Erkennen eines Eintritts in eine Regelungssituation vorgesehen, dass bei einer teilgebremsten Geradeausfahrt der Eintritt in die Regelung erfolgt, wenn mehrere der folgenden Bedingungen erfüllt sind:
δ < *k Grad,* δ̇ < *k*₁ *Gradls, pₘₐᵢₙ* > *k*₂ *bar, v* > *k*₃ *km*/*h,*
*α* < *k*₄ *Grad,*
mit den *Schwellenwerten k bis k*₄*.*

Als weitere Bedingung zum Erkennen eines Eintritts in eine Regelungssituation ist vorgesehen, dass bei einer teilgebremsten Kurvenfahrt der Eintritt Kᵢₙ in die Regelung nach der Beziehung Kᵢₙ = *f*(*δ,*δ*,pₘₐᵢₙ,v,α,aᵢₛₜ*) erfolgt, wenn eine oder mehrere der folgenden Bedingungen erfüllt sind:
*Kurve ist ermittelt,*
*Kurvenradius* > *k*₁₀ *m, vorzugsweise* > 20 *m,*
*Übersteuern ist ermittelt,*
*ESP ist nicht aktiv,*
*ABS ist nicht aktiv,*
mit dem Schwellenwert k₁₀.

Bei der teilgebremsten Kurvenfahrt erfolgt der Eintritt in die Regelung bevorzugt dann, wenn mehrere der folgenden Bedingungen erfüllt sind:
δ < *f*(*v*) *Grad,* δ *< k*₅ *Grad*/*s, pₘₐᵢₙ* > *k*₆ *bar*, *v* > *k*₇ *km*/*h,*
*α* < *k*₈ *Grad, aᵢₛₜ* > *k*₉ *m*/*s*²,
mit den Schwellenwerten *k*₅ bis *k*₉ und *f*(*v*). Der Lenkwinkel δ muss dabei einen Schwellenwert unterschreiten, der in Abhängigkeit von der Fahrzeuggeschwindigkeit gebildet wird. Empirische Untersuchungen führten dabei zu drei Lenkwinkel-Schwellenwerten die im Bereich zwischen 2 und 30 Grad lagen, denen Fahrzeuggeschwindigkeiten in den Bereichen von 30 bis 50 km/h, 100 bis 140 km/h und 220 bis 250 km/h zugeordnet wurden.

Als Bedingung zum Erkennen eines Austritts aus einer Regelungssituation ist vorgesehen, dass bei einer teilgebremsten Geradeausfahrt der Austritt aus dem Korrigieren bzw. Regeln von Abweichungen von einer gewünschten Fahrspur durch Einstellung bzw. Modifikation des eingesteuerten Bremsdrucks erfolgt, wenn mindestens eine der folgenden Bedingungen erfüllt ist:
*ESP ist aktiv,*
*ABS ist aktiv,*
*δ > k*₁₁ *Grad*,
δ > *k*₁₂ *Grad*/*s*,
mit den Schwellenwerten *k*₁₂ *und k*₁₁.

Für den Fall, dass die Eintrittsbedingungen (aktivierte Regelungssituation) zwar erfüllt waren, aber dass bei einer teilgebremsten Geradeausfahrt der Austritt aus der aktivierten Regelsituation, ohne dass ein Korrigieren bzw. Regeln von Abweichungen von einer gewünschten Fahrspur stattgefunden hat, erfolgt, muss mindestens eine der folgenden weiteren Bedingungen erfüllt sein:
*δ > k Grad,*
δ > *k*₁ *Grad*/*s*,
*pₘₐᵢₙ < k*₂ *bar,*
*v* < *k*₃ *km*/*h*,
*α > k*₄ *Grad,*
*eine Geradeausfahrt ist nicht ermittelt,*
mit den Schwellenwerten k und k₁ bis k₄.

Als Bedingung zum Erkennen eines Austritts aus einer Regelungssituation ist vorgesehen, dass bei einer teilgebremsten Kurvenfahrt der Austritt aus dem Korrigieren bzw. Regeln von Abweichungen von einer gewünschten Fahrspur durch Einstellung bzw. Modifikation des eingesteuerten Bremsdrucks erfolgt, wenn mindestens eine der folgenden Bedingungen erfüllt ist:
ESP ist aktiv,
ABS ist aktiv,
δ > *k*₁₂ *Grad*/*s,*
mit dem Schwellenwert k₁₂.

Für den Fall, dass die Eintrittsbedingungen (aktivierte Regelungssituation) zwar erfüllt waren, aber dass bei einer teilgebremsten Kurvenfahrt der Austritt aus der aktivierten Regelsituation, ohne dass ein Korrigieren bzw. Regeln von Abweichungen von einer gewünschten Fahrspur stattgefunden hat, erfolgt, muss mindestens eine der folgenden weiteren Bedingungen erfüllt sein:
δ > *f*(*v*), d.h. der Lenkwinkel ist größer als ein von der Fahrzeuggeschwindigkeit abhängiger Schwellenwert, mit linearer Interpolation zwischen diesen Stützstellen)
δ̇ *> k*₁₃ *Grad*/*s,*
*pₘₐᵢₙ* < *k*₁₄*,* ggf. in Abhängigkeit von der Querbeschleunigung,
*v* < *k*₁₅ *km*/*h,*
*α* > *k*₁₆ *Grad,*
*aᵢₛₜ < k*₁₇*m*/*s²,*
*Kurvenradius < k*₁₇ *m, vorzugsweise <* 20 *m*
*ESP ist nicht aktiv*, {ESP Situationserkennung erkennt keine Kurvensituation (konstant oder verzögert)}
*tₚ > k*₁₈ *s,*
mit den Schwellenwerten *k*₁₃ *bis k*₁₈*,* und *f*(*v*), und der Zeit tₚ nach Beginn der Bremsung.

Vorteilhaft ist, dass keine Einstellung bzw. Modifikation des Bremsdrucks erfolgt, wenn zuvor nicht die Bedingungen nach den Ansprüchen 7, 8 oder 9, 10 erfüllt sind.

Die von der Fahrstabilitätsregelung veranlassten Bremseneingriffe für das Korrigieren bzw. Regeln von Abweichungen von der gewünschten Fahrspur erfolgt vorteilhaft durch Einstellung bzw. Modifikation des eingesteuerten Bremsdrucks über eine Längskraftreduktion durch Druckabbau an mindestens einem kurveninneren Rad, vorzugsweise am kurveninneren Hinterrad. Eine vorteilhafte Weiterbildung des LED Verfahrens sieht vor, dass der Druckabbau an den beiden kurveninneren Rädern erfolgt.

Während die eingestellte Druckdifferenz an der Vorderachse nach dem Verlassen der Regelung ausgeglichen wird, bleibt die an der Hinterachse aufgebaute Druckdifferenz durch die elektronische Bremskraftverteilung (EBV) auch nach der Regelung bestehen.

Vorteilhafte Weiterbildungen der Erfindung sind in den Unteransprüchen angegeben.

Ein Ausführungsbeispiel der Erfindung ist in der Zeichnung dargestellt und wird im Folgenden näher beschrieben.

Es zeigen
Fig. 1. ein Fahrzeug mit ESP Regelungssystem
Fig. 2 eine Zustandsmaschine die die aktivierten bzw. deaktivierten Regelungssituationen teilgebremste Kurvenfahrt, teilgebremste Geradeausfahrt und keine Regelungssituation verdeutlicht.

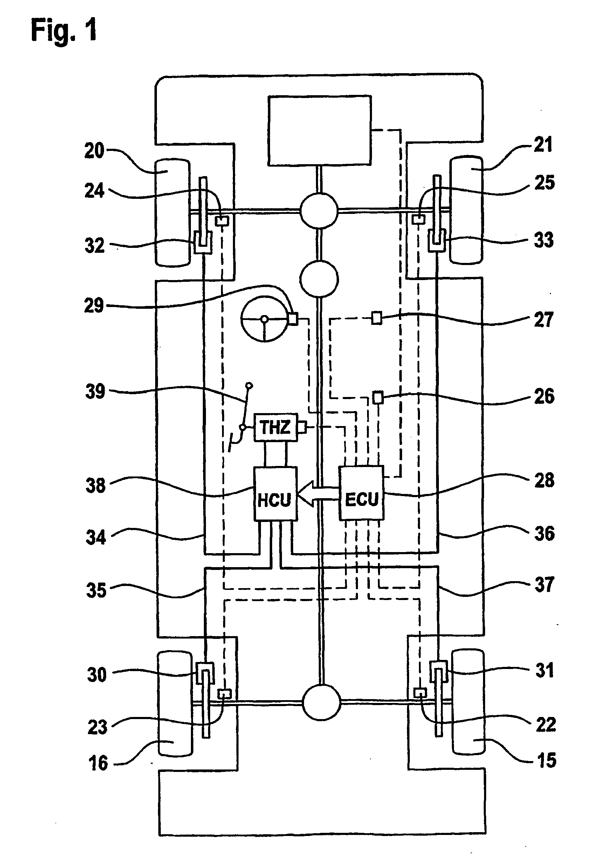

In Fig. 1 ist ein Fahrzeug mit ESP-Regelungssystem, Bremsanlage, Sensorik und Kommunikationsmöglichkeiten schematisch dargestellt. Die vier Räder sind mit 15, 16, 20, 21 bezeichnet. An jedem der Räder 15, 16, 20, 21 ist je ein Radsensor 22 bis 25 vorgesehen. Die Signale werden einer Elektronik-Steuereinheit 28 zugeführt, die anhand vorgegebener Kriterien aus den Raddrehzahlen die Fahrzeuggeschwindigkeit v ermittelt. Weiterhin sind ein Gierratensensor 26, ein Querbeschleunigungssensor 27 und ein Lenkradwinkelsensor 29 mit der Komponente 28 verbunden. Jedes Rad weist außerdem eine individuell ansteuerbare Radbremse 30 bis 33 auf. Diese Bremsen werden hydraulisch betrieben und empfangen unter Druck stehendes Hydraulikfluid über Hydraulikleitungen 34 bis 37. Der Bremsdruck wird über einen Ventilblock 38 eingestellt, wobei der Ventilblock von elektrischen Signalen Fahrer unabhängig angesteuert wird, die in der elektronischen Steuereinheit 28 erzeugt werden. Über ein von einem Bremspedal betätigten Hauptzylinder kann von dem Fahrer Bremsdruck in die Hydraulikleitungen eingesteuert werden. In dem Hauptzylinder bzw. den Hydraulikleitungen sind Drucksensoren P vorgesehen, mittels denen der Fahrerbremswunsch erfaßt werden kann. Über eine Schnittstelle(CAN) ist die Elektronik-Steuereinheit mit dem Motorsteuergerät verbunden

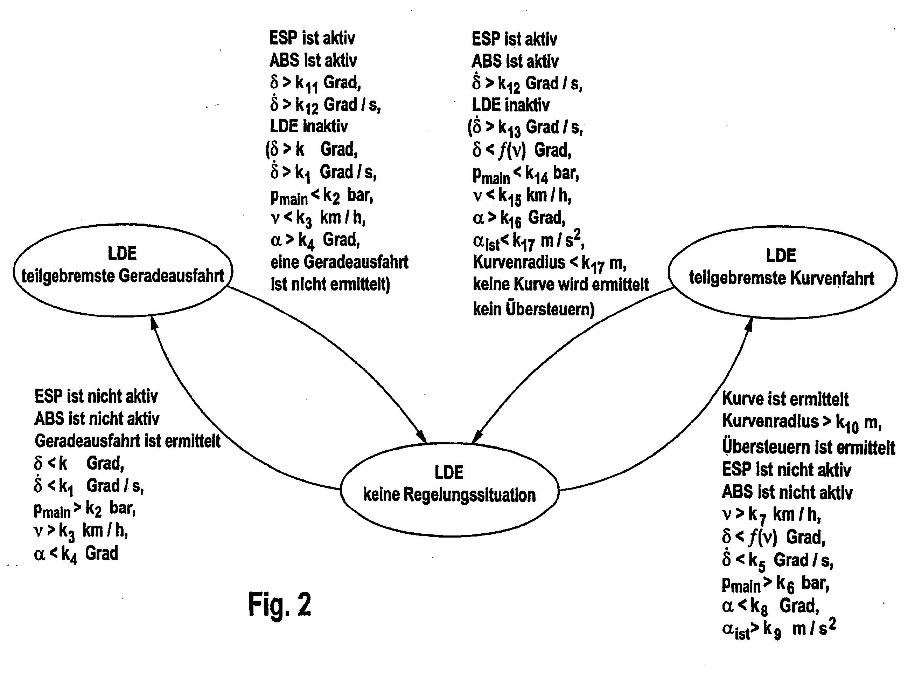

Über das ESP-Regelungssystem mit Bremsanlage, Sensorik und Kommunikationsmöglichkeiten das die Ausstattungselemente
- vier Raddrehzahlsensoren
- Drucksensor (Bremsdruck im Hauptzylinder *pₘₐᵢₙ*)
- Querbeschleunigungssensor (Querbeschleunigungssignal *aᵢₛₜ*, Querneigungswinkel α)
- Gierratensensor (ψ̇)
- Lenkradwinkelsensor (Lenkwinkel δ, Lenkwinkelgeschwindigkeit δ̇)
- individuell ansteuerbare Radbremsen
- Hydraulikeinheit (HCU)
- Elektronik-Steuereinheit (ECU)
aufweist, lässt sich eine Aussage über die jeweilige Fahrsituation und damit über die Ein- und Austrittsbedingungen in eine aktivierte bzw. deaktivierte Regelungssituation realisieren. Damit ist eine Hauptkomponente des LDE (Low Dynamic ESP) Verfahrens, die Fahrsituationserkennung, möglich, während die andere Hauptkomponente, die Interaktion mit dem Bremssystem, ebenfalls auf die wesentlichen Komponenten des ESP Regelungssystems zurückgreift. In der Situationserkennung wird anhand der ESP-Sensorik und den daraus resultierenden gemessenen oder abgeleiteten internen und externen Signalgrößen entschieden, ob eine für das LDE typische Fahrsituation vorliegt. Weiterhin wird überprüft, ob andere Teilsysteme des ESP oder das ESP selbst bereits über das Bremssystem in die Radbremsen 30 bis 33 eingreifen. In diesem Fall bleibt das LDE Regelungssystem passiv, d.h. es erfolgt kein Regelungseingriff durch das LDE Verfahren. Das Erkennen der Fahrsituation basiert auf den Größen Lenkwinkel (δ), Lenkwinkelgeschwindigkeit (δ̇), Bremsdruck (*pₘₐᵢₙ*), Fahrzeuggeschwindigkeit (*v*), Querneigungswinkel (α), Querbeschleunigung (*aᵢₛₜ*), Kurvenradius und den Zuständen der ESP Fahrstabilitätsregelung ESP aktiv, ABS aktiv, ESP nicht aktiv, ABS nicht aktiv und ggf. weiterer Funktionen, wie z.B. die eines hydraulischen Bremsassistenten. Dabei wird eine aktivierte oder deaktivierte Regelungssituation in Abhängigkeit von einer teilgebremsten Geradeausfahrt und teilgebremsten Kurvenfahrt ermittelt. Die Struktur der Zustandsmaschine ist in Fig. 2 veranschaulicht. Sie besitzt als Zustände die Regelungssituationen LDE bei teilgebremster Geradeausfahrt und LDE bei teilgebremster Kurvenfahrt, sowie den Ruhezustand "keine Regelungssituation". Jeder Pfeil in dem Diagramm kennzeichnet einen erlaubten Zustandsübergang. Dieser Übergang wird aktiv, wenn die Ein- bzw. Austrittsbedingungen für die jeweilige Regelungssituation - erfüllt werden. Durch die eindeutige Formulierung und Zuweisung der Regelungssituationen in einer Zustandsmaschine kann es keine Überlagerungen zwischen den Funktionsbereichen oder Doppeldeutigkeiten geben und auch alle Übergänge können nur in der vorgeschriebenen Form erfolgen. Sobald eine der beiden aktiven LDE Regelungssituationen erreicht wurde, wird dem nachgeschalteten LDE Regler der Regelungseintritt zum Korrigieren bzw. Regeln der Abweichungen von der gewünschten Fahrspur erlaubt. Da nur eine Regelungssituation zur Zeit auftritt, kann der gleiche LDE Regler für beide Zustände verwendet werden, d.h. die Eigenschaften des Reglers können in Abhängigkeit von dieser Situation verändert werden (z.B. Eintrittstotzeiten, Ein- und/oder Austrittschwellen (ggf. auch mittels eines querbeschleunigungsabhängigen Ansatzes)). Die Bedingungen für die Zustandsübergänge "LDE keine Regelungssituation" > "LDE teilgebremste Geradeausfahrt" und umgekehrt (Ein- und Austrittsbedingungen) werden im Folgenden näher beschrieben. Bei einer teilgebremsten Geradeausfahrt müssen mehrere der folgenden Bedingungen, vorzugsweise alle, für eine aktivierte Regelungssituation (Eintritt) erfüllt sein: ESP ist nicht aktiv,
ABS ist nicht aktiv, Geradeausfahrt ist ermittelt,
*δ* < *k Grad,* δ̇ *< k*₁ *Gradls, pₘₐᵢₙ* > *k*₂ *bar, v* > *k*₃ *kmlh,*
*α < k*₄ *Grad,*
mit den Schwellenwerten *k bis k*₄*,* die empirisch ermittelt werden.

Der Austritt aus der aktivierten Regelungssituation mit einer Korrektur bzw. Regelung der Abweichungen von einer gewünschten Fahrspur erfolgt, wenn mindestens eine der Bedingungen erfüllt ist:
*ESP ist aktiv,*
*ABS ist aktiv,*
δ > *k*₁₁ *Grad,*
δ *> k*₁₂ *Gradls,*
mit den Schwellenwerten *k*₁₂ *und k*₁₁*.*

Liegt nur eine aktivierte Regelungssituation ohne Korrektur bzw. Regelung der Abweichung von der gewünschten Fahrspur vor (LDE inactiv), dann erfolgt der Austritt aus der aktivierten Regelungssituation, wenn mindestens eine der Bedingungen erfüllt ist:
*δ* > *k Grad,*
δ > *k*₁ *Grad*/*s,*
*pₘₐᵢₙ* < *k*₂ *bar,*
*v* < *k*₃ *km*/*h,*
*α* > *k*₄ *Grad,*
*eine Geradeausfahrt ist nicht ermittelt.*

In Fahrversuchen hat sich ergeben, dass der LDE Regler für die Regelungssituation LDE bei teilgebremster Kurvenfahrt empfindlichere Eintrittsschwellen benötigt, als für Regelungssituation LDE bei teilgebremster Geradeausfahrt. Im Folgenden werden die Bedingungen für die Übergänge zwischen den Zuständen "LDE keine Regelungssituation" und "LDE teilgebremste Kurvenfahrt" beschrieben. Die nachfolgend genannten Bedingungen für den Eintritt der Regelungssituation "LDE teilgebremste Kurvenfahrt" müssen vorzugsweise alle gleichzeitig erfüllt sein (Verundung).

Bei einer teilgebremsten Kurvenfahrt müssen für den Eintritt in die Regelung mehrere, vorzugsweise alle, der folgenden Bedingungen erfüllt sein:
a) Standard ESP ist nicht aktiv
b) ABS ist nicht aktiv
c) Lenkwinkel δ ist kleiner als ein Schwellenwert (in Abhängigkeit von der Fahrzeuggeschwindigkeit [*δ*<*f*(v)])*,* vorzugsweise drei Lenkwinkelschwellenwerte = (zwischen 2 und 30 Grad) für die drei Geschwindigkeiten = (zwischen 30 und 50 km/h, 100 und 140 km/h, 220 und 250 km/h) mit linearer Interpolation zwischen diesen Stützstellen)
d) Lenkwinkelgeschwindigkeit δ̇ ist kleiner als ein Schwellenwert *k*₅
e) Fahrervordruck *pₘₐᵢₙ* ist grösser als ein Schwellenwert *k*₆, der ggf. in Abhängigkeit von der Querbeschleunigung gebildet werden kann
f) Fahrzeuggeschwindigkeit v ist grösser als ein Schwellenwert *k*₇
g) Querneigungswinkel α der Fahrbahn ist kleiner als ein Schwellenwert *k*₈
h) Querbeschleunigung *aᵢₛₜ* ist grösser als ein Schwellenwert *k*₉
i) Kurvenradius ist grösser als ein Schwellenwert *k*₁₀, vorzugsweise 20 m
j) ESP Situationserkennung erkennt eine Kurvensituation (konstant oder verzögert)
k) Zeit nach Beginn der Bremsung überschreitet eine bestimmte Grenze nicht, vorzugsweise 3 Sekunden

Für die genaue Formulierung der Bedingung b) werden verschiedene Vorgehensweisen vorteilhaft vorgeschlagen. Eine Möglichkeit besteht darin, einen Eintritt nur zu erlauben, wenn generell an keinem Rad 15, 16, 20, 21 die Funktion ABS aktiv ist. Weiterhin wäre es möglich, nur dann aktiv zu werden, wenn an dem jeweiligen Rad, an dem LDE den Bremsdruckmodulieren will, die ABS Funktion noch nicht aktiv ist. Ebenso wäre es möglich, die Druckmodulation durch LDE an einer Achse nur dann zu erlauben, wenn an der gleichen Achse ABS noch nicht aktiv ist.

Bei einer teilgebremsten Kurvenfahrt erfolgt der Austritt aus dem Korrigieren bzw. Regeln von Abweichungen von einer gewünschten Fahrspur durch Einstellung bzw. Modifikation des eingesteuerten Bremsdrucks, wenn mindestens eine der folgenden Bedingungen erfüllt ist (die Erfüllung einer Bedingung allein ist ausreichend; Veroderung):
a) Standard ESP ist aktiv
b) ABS ist aktiv
c) Lenkwinkelgeschwindigkeit δ̇ ist grösser als ein Schwellenwert *k*₁₂ Grad/s

Für die Bedingung b) gelten wiederum die oben beschriebenen Möglichkeiten. Sofern der LDE Regler noch nicht eine Korrektur bzw. Regelung einer Abweichung von der gewünschten Fahrspur durchgeführt hat, gelten für den Austritt aus der Regelungssituation (z.B. ist dieser Fall möglich, wenn die Eintrittsbedingungen der Regelungssituation erfüllt waren, die später noch zu beschreibende Regelabweichung jedoch unterhalb der Eintrittsschwelle des LDE lag) zusätzlich zu den Bedingungen a) bis c) die folgenden Bedingungen, wobei eine der folgenden Bedingungen zum Austritt aus der aktivierten Regelungssituation erfüllt sein muss:
l) Lenkwinkel δ ist grösser als ein von der Fahrzeuggeschwindigkeit abhängiger Schwellenwert (f(v)),vorzugsweise drei Lenkwinkelschwellenwerte = (zwischen 2 und 30 Grad) für die drei Fahrzeuggeschwindigkeiten = (zwischen 30 und 50 km/h, 100 und 140 km/h, 220 und 250 km/h) mit linearer Interpolation zwischen diesen Stützstellen)
d) Lenkwinkelgeschwindigkeit δ̇ ist grösser als ein Schwellenwert *k*₁₃ Grad/s
e) Fahrervordruck *pₘₐᵢₙ* ist kleiner als ein Schwellwert *k*₁₄ der ggf. in Abhängigkeit von der Querbeschleunigung gebildet werden kann
f) Fahrzeuggeschwindigkeit *v* ist kleiner als ein Schwellwert *k*₁₅ km/h)
g) Querneigungswinkel α der Fahrbahn ist grösser als ein Schwellwert *k*₁₆ Grad
h) Querbeschleunigung *aᵢₛₜ* ist kleiner als ein Schwellwert *k*₁₇ m/s²
i) Kurvenradius ist kleiner als ein Schwellwert *k*₁₇ (vorzugsweise 20 m)
j) ESP Situationserkennung erkennt keine Kurvensituation (konstant oder verzögert)
k) Zeit *tₚ* nach Beginn der Bremsung überschreitet einen bestimmten Schwellwert *k*₁₈ Sekunden

Ist die Fahrsituation eindeutig erkannt, so kann die Regelung ausgeführt werden. Als Regelgröße dient hier die Gierrate ψ̇ des Fahrzeugs, deren Abweichung vom modellierten Sollverhalten ein Maß für die Abweichung von der gewünschten Fahrspur darstellt, die auf ein Minimum reduziert werden soll. Im Vergleich zur ESP-Gierratenregelung erfolgt beim LDE der Eingriff schon bei wesentlich kleineren Regelabweichungen. Hierzu wird die nach ESP Fahrstabilitätskriterien gebildete ESP Regelschwelle *(S_{ESP})* von der ESP Fahrstabilitätsregelung bei einer Geradeausfahrt mittels eines ersten und bei einer Kurvenfahrt mittels eines zweiten Korrekturfaktors *(k*_{*GERADE*1}*, k*_{*KURVE*2}*)* modifiziert.

Im Gegensatz zur konventionellen ESP-Regelung, bei dem das Zusatzgiermoment (siehe DE 195 15 059 A1) durch aktiven Druckaufbau am kurvenäußeren Vorderrad eingesteuert wird, erfolgt beim *Low Dynamic ESP* (LDE) die Stabilisierung des Fahrzeugs über die Längskraftreduktion durch Druckabbau an den kurveninneren Rädern. Es findet kein aktiver Druckaufbau statt. Die dabei angewandte selektive Pumpenansteuerung, die lediglich zum Überlaufschutz des Niederdruckspeichers dient, und die Minimierung der Ventilansteuerungen verbessern den Komfort nachhaltig. Die LDE-Aktivitäten sind so für den Fahrer kaum wahrnehmbar, so dass auch die Ansteuerung der ESP-Funktionslampe unterbleiben kann.

LDE-Eingriffe sind in der Regel ähnlich wie ESP-Übersteuereingriffe ausgelegt. Der Druckabbau im LDE erfolgt jedoch gleichzeitig an beiden kurveninneren Rädern, wobei das Hauptaugenmerk auf dem Abbaupotential an der Hinterachse liegt.

Während der eingestellten Druckdifferenz an der Vorderachse nach dem Verlassen der Regelung ausgeglichen wird, bleibt die an der Hinterachse aufgebaute Druckdifferenz durch EBV auch nach der Regelung bestehen.

Die o.g. Abbauten werden abhängig von der Dynamik und dem Ausmaß des Schiefziehens umgesetzt. Darüber hinaus beinhaltet LDE eine Reihe von Maßnahmen um ungerechtfertigte Regelungen infolge der kurzzeitigen und permanenten Signalstörungen bzw. Fehlerkennungen zu vermeiden.

Zur Optimierung der Übergänge vom LDE ins ESP werden im Hinblick auf eine komfortablere Regelung die Eintrittsschwellen des ESP aufgeweitet, so dass ein ESP-Eingriff erst bei größeren Instabilitäten, die allein durch einen Druckabbau nicht zu kompensieren sind, erfolgt.

## Patentansprüche

1. Verfahren zur Verbesserung der Fahreigenschaft eines Fahrzeugs bei teilgebremster Fahrt, mit einer Fahrstabilitätsregelung zum Korrigieren von Abweichungen von einer gewünschten Fahrspur, wobei als Regelgröße die Gierrate des Fahrzeugs dient, mit den Schritten Ermitteln von internen und externen Größen und Zuständen der Fahrstabilitätsregelung, die Fahrzustandsparameter und den Spurverlauf des Fahrzeugs wiedergeben, Ermitteln einer aktiven Regelungssituation, und Korrigieren von Abweichungen von einer gewünschten Fahrspur durch Modifikation des eingesteuerten Bremsdrucks, wenn ein Schwellenwert (*S_{ESP}*) der Gierratenregelung überschritten wird, **dadurch gekennzeichnet, dass** der Eintritt in eine aktivierte und der Austritt aus einer aktivierten Regelsituation in Abhängigkeit von einer Geradeausfahrt oder einer Kurvenfahrt unter Einbeziehung der internen und externen Größen und Zustände durchgeführt wird, wobei die internen und externen Größen mit Schwellenwerten verglichen werden und eine Bewertung der Zustände derart erfolgt, ob die Zustände der Fahrstabilitätsregelung aktiviert oder deaktiviert sind und dass der Schwellenwert (*S_{ESP}*) der Gierratenregelung bei einer Geradeausfahrt mittels eines ersten und bei einer Kurvenfahrt mittels eines zweiten Korrekturfaktors (*k*_{*GERADE*1}*, k*_{*KURVE*2}) modifiziert wird.

2. Verfahren nach Anspruch 1, **dadurch gekennzeichnet, dass** die internen und externen Größen und Zustände, der Lenkwinkel (δ), die Lenkwinkelgeschwindigkeit (δ̇), der Bremsdrucks (*pₘₐᵢₙ*), die Fahrzeuggeschwindigkeit (*v*), der Querneigungswinkel (α), die Querbeschleunigung (*aᵢₛₜ*), der Kurvenradius und Regelungszustände einer Fahrstabilitätsregelung sind.

3. Verfahren nach Anspruch 2, **dadurch gekennzeichnet, dass** bei einer teilgebremsten Geradeausfahrt der Eintritt Gᵢₙ in die Regelung nach der Beziehung Gᵢₙ = *f*(δ,*δ̇,pₘₐᵢₙ,v*,α) erfolgt, wenn eine oder mehrere der weiteren folgenden Bedingungen erfüllt sind:
ESP ist nicht aktiv,
ABS ist nicht aktiv,
Geradeausfahrt ist ermittelt.

4. Verfahren nach Anspruch 3, **dadurch gekennzeichnet, dass** bei einer teilgebremsten Geradeausfahrt der Eintritt in die Regelung erfolgt, wenn mehrere der folgenden Bedingungen erfüllt sind:
*δ < k Grad,* δ̇ *< k*₁ *Gradls, pₘₐᵢₙ* > *k*₂ *bar, v* > *k*₃ *kmlh,*
*α < k*₄ *Grad,*
mit den Schwellenwerten *k bis k*₄*.*

5. Verfahren nach einem der Ansprüche 2 bis 4, **dadurch gekennzeichnet, dass** bei einer teilgebremsten Kurvenfahrt der Eintritt Kᵢₙ in die Regelung nach der Beziehung Kᵢₙ = *f*(δ,δ̇,*pₘₐᵢₙ,v,*α,*aᵢₛₜ*) erfolgt, wenn eine oder mehrere der folgenden Bedingungen erfüllt sind:
*Kurve ist ermittelt,*
*Kurvenradius > k*₁₀ *m, vorzugsweise >* 20 *m,*
*Übersteuern ist ermittelt,*
*ESP ist nicht aktiv,*
*ABS ist nicht aktiv,*
mit dem Schwellenwert *k*₁₀.

6. Verfahren nach Anspruch 5, **dadurch gekennzeichnet, dass** bei einer teilgebremsten Kurvenfahrt der Eintritt in die Regelung erfolgt, wenn mehrere der folgenden Bedingungen erfüllt sind:
*δ < f(v)Grad,* δ̇ *< k*₅ *Gradls, pₘₐᵢₙ > k*₆ *bar, v > k*₇ *km*/*h,*
*α < k*₈ *Grad, aᵢₛₜ > k*₉ *m*/*s*²,
mit den Schwellenwerten *k*₅ bis *k*₉ und *f*(*v*).

7. Verfahren nach Anspruch 2, **dadurch gekennzeichnet, dass** bei einer teilgebremsten Geradeausfahrt der Austritt aus dem Korrigieren von Abweichungen von einer gewünschten Fahrspur durch Modifikation des eingesteuerten Bremsdrucks erfolgt, wenn mindestens eine der folgenden Bedingungen erfüllt ist:
*ESP ist aktiv,*
*ABS ist aktiv,*
*δ* > *k*₁₁ *Grad,*
δ̇ *> k*₁₂ *Grad*/*s,*
mit den Schwellenwerten *k*₁₂ *und k*₁₁*.*

8. Verfahren nach Anspruch 7, **dadurch gekennzeichnet, dass** bei einer teilgebremsten Geradeausfahrt der Austritt aus der aktivierten Regelsituation, ohne dass ein Korrigieren von Abweichungen von einer gewünschten Fahrspur stattgefunden hat, erfolgt, wenn mindestens eine der folgenden weiteren Bedingungen erfüllt ist:
*δ > k Grad,*
δ̇ *> k*₁ *Gradls*,
*pₘₐᵢₙ < k*₂ *bar,*
*v < k*₃ *km*/*h,*
*α > k*₄ *Grad,*
*eine Geradeausfahrt ist nicht ermittelt*,
mit den Schwellenwerten k und k₁ bis k₄.

9. Verfahren nach Anspruch 2, **dadurch gekennzeichnet, dass** bei einer teilgebremsten Kurvenfahrt der Austritt aus dem Korrigieren von Abweichungen von einer gewünschten Fahrspur durch Modifikation des eingesteuerten Bremsdrucks erfolgt, wenn mindestens eine der folgenden Bedingungen erfüllt ist:
ESP ist aktiv,
ABS ist aktiv,
δ̇ *> k*₁₂ *Gradls,*
mit dem Schwellenwert k₁₂.

10. Verfahren nach Anspruch 9, **dadurch gekennzeichnet, dass** bei einer teilgebremsten Kurvenfahrt der Austritt aus der aktivierten Regelungssituation, ohne dass ein Korrigieren von Abweichungen von einer gewünschten Fahrspur stattgefunden hat, erfolgt, wenn mindestens eine der folgenden weiteren Bedingungen erfüllt ist:
δ > *f*(*v*), d.h. der Lenkwinkel ist größer als ein von der Fahrzeuggeschwindigkeit abhängiger Schwellenwert
δ̇ *> k*₁₃ *Grad*/*s,*
*pₘₐᵢₙ < k*₁₄, ggf. in Abhängigkeit von der Querbeschleunigung,
*v < k*₁₅ *kmlh,*
*α* > *k*₁₆ *Grad,*
*aᵢₛₜ < k*₁₇ *m*/*s*²,
*Kurvenradius < k*₁₇ *m, vorzugsweise <* 20 *m,*
*ESP ist nicht aktiv,*
*tₚ* > *k*₁₈ *s*,
mit den Schwellenwerten *k*₁₃ *bis k*₁₈ und *f*(*v*)*,* und der Zeit *tₚ* nach Beginn der Bremsung.

11. Verfahren nach einem der Ansprüche 1 bis 9, **dadurch gekennzeichnet, dass** keine Modifikation des Bremsdrucks erfolgt, wenn zuvor nicht die Bedingungen nach den Ansprüchen 3, 4 oder 5, 6 erfüllt sind.

12. Verfahren nach einem der Ansprüche 1 bis 9, **dadurch gekennzeichnet, dass** das Korrigieren von Abweichungen von der gewünschten Fahrspur durch Modifikation des eingesteuerten Bremsdrucks über eine Längskraftreduktion durch Druckabbau an mindestens einem kurveninneren Rad, vorzugsweise am kurveninneren Hinterrad, erfolgt.

13. Verfahren nach Anspruch 12, **dadurch gekennzeichnet, dass** der Druckabbau an den beiden kurveninneren Rädern erfolgt.

14. Verfahren nach Anspruch 12 oder 13, **dadurch gekennzeichnet, dass** die durch den Druckabbau eingestellte Druckdifferenz an der Hinterachse bei der elektronischen Bremskraftverteilung (EBV) beibehalten wird.

## Claims

1. Method for improving the handling characteristics of a vehicle during partially braked travel, with a driving stability controller for correcting deviations from a desired course, wherein the yaw rate of the vehicle serves as the controlled variable having the steps of determining internal and external variables and states of the driving stability controller which represent driving state parameters and the course of the vehicle in the course, determining an active control situation and correcting deviations from a desired course by modifying the applied brake pressure if a threshold value (*S_{ESP}*) of the yaw rate controller is exceeded, **characterized in that** the start of an activated control situation and the ending of an activated control situation are brought about as a function of straight-ahead travel or cornering including the internal and external variables and states, wherein the internal and external variables are compared with threshold values, and the states are evaluated in such a manner that the states of the driving stability controller are activated or deactivated, and **in that** the threshold value *(S_{ESP})* of the yaw rate controller in the case of straight-ahead travel is modified by means of a first correction factor (*k_{STRAIGHT1}*)*,* and in the case of cornering it is modified by means of a second correction factor (*k_{STRAIGHT1} k_{CORNER2}*)*.*

2. Method according to Claim 1, **characterized in that** the internal and external variables and states are the steering angle (δ), the steering angle speed (δ̇), the brake pressure *(ρₘₐᵢₙ*), the vehicle speed (*v*), the lateral inclination angle (α), the lateral acceleration (α*_{act}*), the bending radius and control states of a driving stability controller.

3. Method according to Claim 2, **characterized in that** in the case of partially braked straight-ahead travel the start *Gᵢₙ* of the control process takes place according to the relationship *Gᵢₙ* = *f(δ,* δ̇, *ρₘₐᵢₙ, v*, α*)* if one or more of the further following conditions are met:
ESP is not active,
ABS is not active, and
straight-ahead travel is determined.

4. Method according to Claim 3, **characterized in that** in the case of partially braked straight-ahead travel the start of the control process takes place if a plurality of the following conditions are met:
δ *< k degree,* δ̇ *< k, degree*/*s, ρₘₐᵢₙ > k₂ bar, v* > *k₃ km*/*h*,
α < *k₄ degree*
with the threshold values *k to k₄.*

5. Method according to one of Claims 2 to 4, **characterized in that** in the case of partially braked cornering the start Kᵢₙ of the control process takes place according to the relationship Kᵢₙ = *f(*δ, δ̇, *ρₘₐᵢₙ, v*, α, α*_{act})* if one or more of the following conditions are met:
*bending is determined,*
*bending radius > k*₁₀ *m, preferably > 20 m,*
*oversteering is determined,*
*ESP is not active, and*
*ABS is not active,*
with the threshold value *k*₁₀.

6. Method according to Claim 5, **characterized in that** in the case of partially braked cornering the start of the control process takes place if a plurality of the following conditions are met:
δ < *f(v) degree,* δ̇ < *k*₅*, degree*/*s, ρₘₐᵢₙ* > *k*₆ *bar, v* > *k*₇ *km*/*h,*
α < *k*₈ *degree, α_{act} > k*₉ *m*/*s²*,
with the threshold values *k*₅ *to k*₉ and *f(v)*.

7. Method according to Claim 2, **characterized in that** in the case of partially braked straight-ahead travel the ending of the correcting of deviations from a desired course takes place by modifying the applied brake pressure if at least one of the following conditions is met:
*ESP is active,*
*ABS is active,*
δ̇ > *k*₁₁ *degrees*
δ̇ > *k*₁₂ *degree*/*s*
*with the threshold values k*₁₂ *and k*₁₁*.*

8. Method according to Claim 7, **characterized in that** in the case of partially braked straight-ahead travel the ending of the activated control situation takes place without deviations from a desired course having been corrected if at least one of the following further conditions is met:
*δ* > *k degrees*
δ̇ > *k*₁ *degree*/*s*
*ρₘₐᵢₙ* < *k*₂ *bar,*
*v* < *k*₃ *km*/*h,*
α > *k*₄ *degrees,*
*straight-ahead travel is not determined,*
with the threshold values *k* and *k*₁ to *k*₄.

9. Method according to Claim 2, **characterized in that** in the case of partially braked cornering the ending of the correction of deviations from a desired course takes by modifying the applied brake pressure if at least one of the following conditions is met:
ESP is active,
ABS is active,
δ̇ > *k*₁₂ *degree*/*s*
with the threshold value *k*₁₂.

10. Method according to Claim 9, **characterized in that** in the case of partially braked cornering the ending of the activated control situation takes place without deviations from a desired course having been corrected if at least one of the following further conditions is met:
δ > *f*(*v*), i.e. the steering angle is greater than a threshold value which is dependent on the vehicle speed
δ̇ *> k*₁₃*, degree*/*s*
*ρₘₐᵢₙ < k*₁₄*,* if appropriate as a function of the transverse acceleration,
*v* < *k*₁₅ *km*/*h,*
α > *k*₁₆ *degrees,*
α*_{act}* < *k*₁₇ *m*/*s²*
*bending radius* < *k*₁₇ *m, preferably* < 20 *m*,
*ESP is not active,*
*tₚ* > *k*₁₈ *s*,
with the threshold values *k*₁₃ to *k*₁₈ and *f(v)*, and the time *tₚ* after the start of the breaking.

11. Method according to one of Claims 1 to 9, **characterized in that** the brake pressure is not modified if the conditions according to Claims 3, 4 or 5, 6 are not met beforehand.

12. Method according to one of Claims 1 to 9, **characterized in that** deviations from the desired course are corrected by modifying the applied brake pressure by means of a longitudinal force reduction by reducing pressure at least at one wheel on the inside of the bend, preferably at the rear wheel on the inside of the bend.

13. Method according to Claim 12, **characterized in that** the reduction of pressure takes place at the two wheels on the inside of the bend.

14. Method according to Claim 12 or 13, **characterized in that** the pressure difference which is set by means of the reduction of pressure at the rear axle is maintained during the electronic braking force distribution (EBD).

## Revendications

1. Procédé pour améliorer la tenue de route d'un véhicule en cas de conduite avec freinage partiel, comprenant une régulation de la stabilité de conduite en vue de corriger des écarts par rapport à un tracé souhaité, la vitesse de lacet du véhicule étant utilisée comme grandeur de réglage, comprenant les étapes de détermination de grandeurs internes et externes et d'états de régulation de la stabilité de conduite qui reproduisent des paramètres d'état de conduite et le suivi du tracé du véhicule, détermination d'une situation de régulation active, et correction des écarts par rapport à un tracé souhaité par modification de la pression de freinage commandée, si une valeur seuil (S_{ESP}) de la régulation de la vitesse de lacet est dépassée, **caractérisé en ce que** l'entrée dans une situation de régulation activée et la sortie d'une situation de régulation activée sont mises en oeuvre en fonction d'une conduite en ligne droite ou d'une conduite en virage en tenant compte des grandeurs et des états internes et externes, les grandeurs internes et externes étant comparées avec des valeurs seuils et une analyse des états étant effectuée de telle sorte que les états de la régulation de stabilité de conduite soient activés ou désactivés et que la valeur seuil (S_{ESP}) de la régulation de la vitesse de lacet soit modifiée en cas de conduite en ligne droite au moyen d'un premier facteur de correction et en cas de conduite en virage au moyen d'un deuxième facteur de correction (k_{GERADE1}, k_{KURVE2}).

2. Procédé selon la revendication 1, **caractérisé en ce que** les grandeurs et les états internes et externes sont l'angle de braquage (δ), la vitesse angulaire de braquage (δ̇), la pression de freinage (pₘₐᵢₙ), la vitesse de véhicule (*v*), l'angle d'inclinaison transversale *(a),* l'accélération transversale (aᵢₛₜ), le rayon de courbure et les états de régulation d'une régulation de la stabilité de conduite.

3. Procédé selon la revendication 2, **caractérisé en ce que** dans le cas d'une conduite en ligne droite avec freinage partiel, l'entrée Gᵢₙ dans la régulation a lieu selon la relation Gᵢₙ *=f*(*δ,*δ̇*,pₘₐᵢₙ,v,a*)*,* lorsqu'une ou plusieurs des conditions suivantes supplémentaires sont satisfaites :
ESP non activé,
ABS non activé,
conduite en ligne droite détectée.

4. Procédé selon la revendication 3, **caractérisé en ce que** dans le cas d'une conduite en ligne droite avec freinage partiel, l'entrée dans la régulation a lieu lorsque plusieurs des conditions suivantes sont satisfaites :
δ̇ < k degré, δ̇ < k₁ degré /s, pₘₐᵢₙ > k₂ bar, v > k₃ km/h, *a* < k₄ degré,
avec les valeurs seuils k à k₄.

5. Procédé selon l'une quelconque des revendications 2 à 4, **caractérisé en ce que** dans le cas d'une conduite en virage avec freinage partiel, l'entrée Kᵢₙ dans la régulation a lieu en fonction de la relation Kᵢₙ = *f*(*δ,*δ̇*,pₘₐᵢₙ,v,a,aᵢₛₜ*)*,* lorsqu'une ou plusieurs des conditions suivantes sont satisfaites :
un virage est détecté,
rayon de courbure > k₁₀ m, de préférence > 20 m,
un survirage est détecté,
ESP non activé,
ABS non activé,
avec la valeur seuil k₁₀.

6. Procédé selon la revendication 5, **caractérisé en ce que** dans le cas d'une conduite en virage avec freinage partiel, l'entrée dans la régulation a lieu lorsque plusieurs des conditions suivantes sont satisfaites :
δ < *f*(v) degré, δ̇ < k₅ degré /s, pₘₐᵢₙ > k₆ bar, v > k₇ km/h, α < k₈ degré, aᵢₛₜ > k₉ m/s²,
avec les valeurs seuils k₅ à k₉ et *f*(v).

7. Procédé selon la revendication 2, **caractérisé en ce que** dans le cas d'une conduite en ligne droite avec freinage partiel, la sortie de la correction des écarts par rapport à un tracé souhaité est effectuée par modification de la pression de freinage commandée, lorsqu'au moins l'une des conditions suivantes est satisfaite :
ESP activé,
ABS activé,
δ > k₁₁ degrés,
δ̇ > k₁₂ degré/s,
avec les valeurs seuils k₁₂ et k₁₁.

8. Procédé selon la revendication 7, **caractérisé en ce que** dans le cas d'une conduite en ligne droite avec freinage partiel, la sortie de la situation de régulation activée, sans qu'il y ait eu de correction des écarts par rapport à un tracé souhaité, a lieu lorsqu'au moins l'une des conditions suivantes supplémentaires est satisfaite :
δ > k degré,
δ̇ > k₁ degré/s,
pₘₐᵢₙ < k₂ bar,
v < k₃ km/h,
α > k₄ degré,
une conduite en ligne droite n'est pas détectée,
avec les valeurs seuils k et k₁ à k₄.

9. Procédé selon la revendication 2, **caractérisé en ce que** dans le cas d'une conduite en virage avec freinage partiel, la sortie de la correction des écarts par rapport à un tracé souhaité est effectuée par modification de la pression de freinage commandée, lorsqu'au moins l'une des conditions suivantes est satisfaite :
ESP activé,
ABS activé,
δ̇ > k₁₂ degré/s,
avec la valeur seuil k₁₂.

10. Procédé selon la revendication 9, **caractérisé en ce que** dans le cas d'une conduite en virage avec freinage partiel, la sortie de la situation de régulation activée, sans qu'il y ait eu de correction des écarts par rapport à un tracé souhaité, a lieu lorsqu'au moins l'une des conditions suivantes supplémentaires est satisfaite :
δ > *f*(v), c'est-à-dire que l'angle de braquage est supérieur à une valeur seuil dépendant de la vitesse du véhicule,
δ̇ > k₁₃ degré/s,
pₘₐᵢₙ < k₁₄, éventuellement en fonction de l'accélération transversale,
v < k₁₅ km/h,
α > k₁₆ degré,
aᵢₛₜ < k₁₇ m/s²,
rayon de courbure < k₁₇ m, de préférence < 20 m,
ESP non activé,
tₚ > k₁₈ s,
avec les valeurs seuils k₁₃ à k₁₈ et *f*(v), et le temps tₚ après le début du freinage.

11. Procédé selon l'une quelconque des revendications 1 à 9, **caractérisé en ce qu'**aucune modification de la pression de freinage n'a lieu si les conditions selon les revendications 3, 4 ou 5, 6 ne sont pas satisfaites préalablement.

12. Procédé selon l'une quelconque des revendications 1 à 9, **caractérisé en ce que** la correction des écarts par rapport au tracé souhaité par modification de la pression de freinage commandée a lieu par le biais d'une réduction de la force longitudinale par diminution de la pression au niveau d'au moins une roue intérieure par rapport au virage, de préférence au niveau de la roue arrière intérieure par rapport au virage.

13. Procédé selon la revendication 12, **caractérisé en ce que** la diminution de la pression est effectuée au niveau des deux roues intérieures par rapport au virage.

14. Procédé selon la revendication 12 ou 13, **caractérisé en ce que** la différence de pression ajustée par la diminution de la pression au niveau de l'essieu arrière est conservée lors de la répartition de la force de freinage électronique (EBV).
